# EUROPEAN PATENT SPECIFICATION

(11) **EP 0 521 469 B1**
(45) Date of publication and mention of the grant of the patent: **25.09.1996**
(21) Application number: 92111088.8
(22) Date of filing: 30.06.1992
(51) Int. Cl.: B28B 1/54, C04B 35/66, B28B 7/34

(54) **Casting mold**
Giessform
Moule de coulage

(30) Priority: 01.07.1991 JP 185895/91
(43) Date of publication of application: 07.01.1993
(73) Proprietor: TOSHIBA MONOFRAX COMPANY LTD., Chuo-ku, Tokyo (JP)
(72) Inventor: Orimo, Yoshizo, Tokyo (JP); Ito, Akira, Tokyo (JP); Kino, Juichi, Tokyo (JP)
(74) Representative: Weller, Wolfgang, Dr.rer.nat.

(56) References cited:
- EP-A- 0 184 522
- EP-A- 0 440 874
- CH-A- 203 376
- FR-A- 2 517 666
- FR-A- 2 578 835
- FR-A- 2 666 870
- GB-A- 1 120 607
- GB-A- 1 430 409
- US-A- 4 269 799
- US-A- 4 390 501
- DATABASE WPI Week 7631, Derwent Publications Ltd., London, GB; AN 76-58291X & JP-A-50 029 421 (JANOME SEWING MACH LTD)

## Description

The present invention relates to a mold for casting molten materials, said mold being of a predetermined shape and having a predetermined size and shape of mold cavity, the material of said mold comprising quartz particles.

Such a mold is known from JP-A-50 029 421. The known mold is formed from fused SiO₂, circon sand, and Al₂O₃ sand impregnated with materials, e.g. borax and boric acids which form glassy products on heating, and/or materials e.g. wood powder and graphites. The known mold is used for casting steel.

Molds are used in various processes to produce castings. One method of producing castings, e.g. cast ceramic shapes, employs the following basic steps:
a) melting a raw material such as Al₂O₃-ZrO₂-SiO₂ ceramic or Al₂O₃-SiO₂ ceramic by an electric furnace or other means for melting the raw material;
b) Introducing, e.g. pouring, the molten ceramic material into a mold; and
c) cooling the molten ceramic material into a solid shape.

The above outlined basic process also generally applies to metal casting as well as the casting of any material which must first be converted from a solid raw material to a liquid, by way of the application of heat, to enable the raw material to be introduced into a mold cavity having a desired predetermined shape of the final cast article. With this type of casting, it may or may not be desirable to insulate the casting, in the mold, so that the rate of cool down is inhibited, i.e., the casting is annealed as it solidifies and is thereafter cooled down relatively slowly to ambient temperature.

For the production of this type of casting, several molding processes are available. Sand casting indicates that the mold is made of sand with a pre-formed, hollow cavity into which the molten material is introduced, usually by pouring. Investment casting is a variation of sand casting in which a pattern or model of the final desired shape is fabricated from a low melting point material, such as a wax or a plastic, and the sand is packed around the pattern or model. When the molten material is poured into the mold, the low melting point material melts and usually gasifies, with the form of the model or pattern being replaced, within the sand, by the molten metal. Shell molding is, in principal, similar to sand casting except that the mold may be reusable and/or significantly more intricate detail may be introduced into the mold. With shell molding, the mold is usually made from a refractory material such as graphite, a refractory metal or a ceramic, e.g., a non-oxide ceramic or sand bound together with a polymer resin temporary binder, so as to produce a more or less solid mold and to withstand the elevated temperature of the molten material to be introduced into that mold. The shell mold may be carefully machined to incorporate intricate detail and/or the shell mold may be designed to be disassembled from the casting, after solidification, so that the shell mold is removed intact for reuse.

In the sand casting process, a mold is usually formed by molding sand which is composed of varying amounts of silica sand and clay. Silica sand, the nomenclature used to identify molding sand which has a low content of clay, or is absent of clay, is mainly composed of quartz. A resin is added to the silica sand as a temporary organic binder. The resin is blended and mixed into the sand so as to lightly coat substantially each sand particle. The resin used as an organic binder with silica sand molding material is usually a phenol or furan resin which is added to the silica sand in an amount of about 5 wt.% of the sand. The organic binder is burned out (oxidized and off-gased) as the high temperature molten material is introduced into the mold. The organic binder may be cured by pre-heating the formed mold before the molten material is introduced; curing is an assurance of structural integrity of the mold during the introduction of the molten. Although silica sand is very readily available from many sources worldwide, in large quantities and at economical prices, for the sake of efficiency and cost reduction, it is desirable to be able to reuse the silica sand, as many times as possible, for new molds.

Various kinds of natural silica sand are conventionally used, but for those applications where that pouring temperature of the molten material is very high, flattery silica sand having very high purity normally used. High purity silica sand is composed almost entirely of α-quartz (SiO₂) particles. SiO₂ has a very high degree of temperature and oxidation or combustion resistance, and it is essentially otherwise relatively inert to chemical reaction. Even in those cases where the SiO₂ is heated above its melting point, by the introduction of the molten material, the SiO₂ does not flow because its melt viscosity is quite high. Therefore, when some portion of a silica sand mold cavity surface is melted, the mold can still essentially fulfill its function by producing an acceptable casting.

As mentioned, SiO₂ is generally relatively inert to chemical reaction. This is significant in respect to a mold material for casting high temperature, molten materials. If the mold material is reactive, it will "seize" or become welded to the casting, rendering removal of the casting from the mold, and subsequent clean-up, quite labor intensive. SiO₂ has been shown over many years experience to have negligible reactivity with molten metal and ceramic materials so that seizure is essentially an insignificant problem. To put it another way, SiO₂ has very good mold release properties. This, in combination with the other properties of SiO₂, renders silica sand a relatively good and desirable mold material.

As the molten material is poured into a mold, the mold, at a much lower temperature, begins to absorb heat from the poured, high temperature material. This results in the surface temperature of the molten material, adjacent to the mold cavity surfaces, being immediately significantly reduce while the internal temperature of the molten material remains relatively substantially higher. The rapid, almost instantaneous cooling of the surfaces of the molten material produces shrinkage, however the interior of the molten material does not shrink at the same rate or to the same degree. The mold, on the other hand, is heated by the molten material, so the mold, particularly those surfaces adjacent to the molten metal, expands. In a word, the molten metal of the casting tends to shrink, as it is solidifying, while the mold, concurrently, tends to expand. But the expansion of the mold is not uniform; the longer expanses of the mold cavity tend to expand at a greater rate than the corners, the shape transition areas and shorter mold cavity expanses. This phenomenon tends to cause the mold to elongate overall, with the longer expanses, in particular of larger scale molds, tending to warp in a convex manner, producing a corresponding concaving of the adjacent surfaces of the solidifying casting within the mold cavity.

As the result of the mold elongation phenomenon, coupled with the shrinkage of the casting, edge cracks, and cracks in corners and/or shape transition areas, are occasionally formed on the surfaces of the casting. The cracks are the result of stress in the casting; the stress sometimes causes the casting to fracture, either during cooling within the mold or thereafter, when the casting is in use. In the case of larger scale molds, as mention before, concaves are occasionally formed on the flat or expansive surfaces of the casting. Where larger scale castings are to be produced, to compensate for the non-uniform elongation phenomenon of the mold, and its warpage and convexing problems, the mold is designed with reverse warpage built into the surfaces so that the elongation phenomenon will tend to straighten out the flat and/or expansive surfaces. To accomplish this, the surface of the mold pattern is formed in a convex manner so as to produce a corresponding concave pattern in the mold surface. It is sometime possible to eliminate concave surfaces on the casting, but this requires the application of an expensive diamond grinding process where the casting material is ceramic.

Silica sand has a relatively degree of thermal conductivity. Thus, the conventional mold made of silica sand has a capability which is quite adequate for cooling castings, both as the molten metal is solidifying and after solidification has occurred. In addition there is another phenomenon which occurs; there is a crystalline phase transformation which occurs in the quartz crystalline structure (which is hereinafter more fully described). This crystalline phase transformation is endothermic in nature, thus causing a further dissipation of the heat away from the molten material within the mold cavity. On the other hand silica sand expands itself when transformation. This leads to said edge cracks and concave surfaces.

The crystalline phase transformation of silica is a curious phenomena which partially explains the nature of the elongation phenomenon found in silica sand molds. Natural silica sand is composed of the α-quartz crystalline form of SiO₂. When heated up to 573 °C α-quartz transforms into β-quartz with volume expansion of about 1.35 %. At 1250 °C β-quartz transforms into β-cristobalite with another volume expansion of about 17.4 %. At 1700 °C β-quartz transforms into quartz glass, the vitreous, non-crystalline form of SiO₂, with yet another volume expansion of as much as 20 %. Thus the disproportionate expansion, i.e., the elongation phenomenon of silica sand molds, depends in large part on the discrete temperature of each particle of silica sand of the mold.

When the molten material at a temperature of 1700 °C or greater is introduced into a silica sand (α-quartz) mold, each particles of sand in the mold is heated in short time, some instantaneously and some less rapidly, and discrete transformation layers and pockets are formed according to temperature to which each local area has been heated. Consequently, the mold turns into multilayer, non-homogeneous structure formed of various transformation layers and pockets of the various crystalline and non-crystalline forms of SiO₂.

Yet another phenomenon has been discovered. When a molten ceramic material is introduced into a conventional silica sand mold some of the silica sand particles from the surface of the mold cavity are instantaneously cracked and fractured, with some of them disintegrating into fine powder and dust, even before any crystalline phase transformation begins to occur. This phenomenon is caused by thermal shock from the instantaneous, extreme temperature change, resulting from the radiation heating of the silica sand mold cavity surface particle by the molten ceramic material. For example, molten Al₂O₃-ZrO₂-SiO₂ ceramic or molten Al₂O₃-SiO₂ ceramic are normally poured into a conventional silica sand mold at temperatures in excess of about 1900 °C. The broken or fractured pieces of silica sand particles, as well as some of the fine powder and dust, become entrained in the molten ceramic material, causing contamination which can ultimately result in reduced structural integrity of the final casting. In addition, some of the fine powder and dust tends to clog the spaces between the remaining silica sand particles of the mold cavity surface. This reduces the permeability of the mold. Thus, the gases which are emanating from the molten ceramic material, which otherwise could escape through the permeable structure of the mold, are trapped both within the structure of the casting and on the surface thereof. These trapped gases form blow holes, or voids, which further reduce the structural integrity of the final casting.

There is yet another problem which results from the foregoing thermal shock phenomenon. The production of a significant amount of broken or fractured particles, as well as other particle which are cracked and later break up when the silica sand is reprocessed for reuse, and the production of a significant quantity of fine powder and dust, renders a substantial portion of that silica sand incapable of being reused. The reason, simply, is that the smaller particles and fines, less than about 0.3 mm [48 mesh] in size, render the silica sand too impermeable for further use unless and until the used sand is reclassified.

Unfortunately, as a rule of thumb, it is well known that about half of the used silica sand will comprise particles and fines less than about 0.3 mm [48 mesh] in size, thus only about half of the conventional silica sand used in a mold can be reclaimed for reuse. If the recycling ratio is half, i.e., 50 %, each sand particle is only used twice on average before disposal is necessary. This is based on the following calculation; 1 + 0.5 + 0.5² + 0.5³ + ... = 1/(1 - 0.5) = 2. The half which cannot be reclaimed is waste material which must be discarded to be replaced by new, virgin silica sand, at additional cost.

In addition to the foregoing problems, the generation of such a large quantity of fine powder and dust creates quite an environmental problem in the workplace as well as the disposal site. Thus, expensive and elaborate equipment must be installed, operated and maintained to handle the environmental problems created by the generation of relatively large quantities of silica sand fine powder and dust.

Attempts have been made to use alumina particles to form a mold. The rationale for this effort is that alumina is stable in its crystalline state. In other words, alumina is free from crystalline phase transformation across the whole temperature range to which a mold for forming ceramic castings is exposed. But alumina turned out to be unsuitable as mold material because it seizes to the castings, as alumina tends to be substantially more reactive to both molten ceramic materials and molten metals.

As an object of the present invention is to overcome the foregoing problems, to provide an economical mold for casting in which a significantly lesser quantity of fine powder and dust are generated and to enable the consistent production of higher quality castings.

The present invention includes a mold for casting molten material, the mold being of a predetermined shape and having a predetermined size and shape of mold cavity. The basic material used to form the mold is quartz glass in the form of particles. The quartz glass particles and, optionally, other materials, are used to form the mold. The mold may be used for casting Al₂O₃-ZrO₂-SiO₂ ceramic materials. The Al₂O₃-ZrO₂-SiO₂ ceramic material may contain a range of about 25 wt.% to about 40 wt.%, in particular about 33 wt.%, of ZrO₂. The mold may also be used for casting Al₂O₃-SiO₂ ceramic materials. The ceramic materials may be converted into a molten state by an electric furnace or other appropriate means for heating prior to introduction into the mold. The ceramic casting produced by the mold may be an electrocast brick. The mold may have a substantial rectangular parallelpiped cavity. The sizes of the quartz glass particles used to form the mold are preferably between 0.3 mm [48 Tyler mesh] and 2.4 mm [8 Tyler mesh]. The mold may also comprise organic binder in a range of about 0.5 - 5 wt.% of the weight of quartz glass particles used. The mold may be formed *inter alia* by hardening, i.e., stiffening or curing, the organic binder, and the organic binder may be hardened by sprinkling a mixture of the quartz glass particles and organic binder over a heated metal pattern to form the mold. Alternatively, the mold may be formed by a conventional shell mold forming process. Yet another alternative is that the mold may be formed by a vacuum suction method. The organic binder may be a furan resin. Alternatively, the organic binder may be a phenol resin. Yet another alternative is that the organic binder may be water glass. A slow cooling layer may be formed to surround the mold, and the slow cooling layer may be formed of quartz glass particles. In fact, the quartz glass particles of both the mold and the cooling layer may be substantially the same in size. 95 % or more, by weight, of the quartz glass particles used to produce the mold may be reused when a new mold is formed.

These and other features of the present invention are more fully explained and defined by the following Detailed Description and claims.

There is essentially no crystalline phase transformation associated with the quartz glass used to form the mold of the present invention, as quartz glass is the stable morphological form of SiO₂. Thus, there is essentially no mold expansion and the elongation phenomenon outlined above is substantially eliminated. Thus, the castings produced do not suffer from concaving or edge and/or corner cracks (or other cracking in the areas of shape transition). This enables the consistent production of precision castings of high structural integrity and dimensionally close tolerances. The quartz glass particles used to form the mold of the present invention are equally as chemically inert, or even slightly more so, in comparison to the α-quartz of conventional silica sand molds, so there is no problem with reactivity and consequent mold seizure. The quartz glass particles used to form the mold of the present invention are substantially more physically stable across the range of temperatures to which the mold is to be exposed, in comparison to the a-quartz particles of conventional silica sand molds. The result is that the thermal shock phenomenon described above is substantially reduced, in fact, almost completely eliminated. Thus, the problems associated with the generation of large quantities of fine powder and dust are all but eliminated. Because the problems with the generation of fine powders and dust are largely eliminated, i.e. the thermal shock phenomenon all but disappears, the permeability of the molds remains adequate throughout the casting process to vent off gases emanating from the molten material introduced into the mold cavity during its solidification. Thus the problems with blow holes is essentially eliminated. Concurrently, the inclusion of impurities into the molten material, as a result of the thermal shock phenomenon, ceases to be a significant problem. Finally, because the thermal shock problem is all but erased, the quartz glass particles of the mold of the present invention may be recycled and reused over and over again, on an average of twenty (20) times, in comparison to the two (2) times on average that conventional silica sand (α-quartz) particles can be recycled and reused.

The quartz glass particles used to form the mold of the present invention are preferably within a size range of about 0.3 mm [48 mesh] - 2.4 mm [8 mesh] (Tyler Screen Mesh sizing). If any substantial quantity of quartz glass particles is smaller than 0.3 mm [48 mesh], the mold will have relatively poor permeability so that gas bubbles will easily be trapped on the surface and within the castings, resulting in internal casting voids and/or blow holes The permeability of the mold is reduced in direct proportion to the increase in the amount of particles less than about 0.3 mm [48 mesh] in size. On the other hand, use of particles greater in size than about 2.4 mm [8 mesh] tends to reduce the strength and structural integrity of the mold, in some cases causing the mold to collapse during handling and the pouring of molten material into the mold cavity. The strength and structural integrity of the mold are reduced in direct proportion to the increase in the amount of particles greater than about 2.4 mm [8 mesh] in size.

Furan resin, phenol resin and/or water glass, conventional organic binders used in the formation of silica sand molds, may be used to aid in forming the mold of the present invention. The ratio of organic binder to be added to the silica glass is preferably in a range of about 0.5 - 5 % of the quartz glass particles in weight. The mold according to the present invention can be shaped, for example, by sprinkling the mold material (the mixture of quartz glass particles and organic binder) over a heated metal pattern to harden the organic binder. As an alternative, the mold of the present invention may be formed by a conventional shell mold forming process, either separately or by way of an automated shell mold forming machine, as part of an automated shell molding process. The mold, as a third alternative, may be formed by a conventional vacuum suction method; in such a case, no binder is added to the quartz glass particles. Other mold forming processes and techniques, known to those skilled in the art, may also be used.

The quartz glass particles used in the present invention are readily commercially available as they are manufactured in quantity for use as filler material in the manufacturing processes related to the packaging of semiconductors.

### Example

A mold material was prepared by adding a relatively small quantity of furan resin organic binder to a quantity of quartz glass particles of 0.4 mm [+40 mesh] 1.7 mm -[10 mesh] size. The ratio of furan resin organic binder added to quartz glass particles was 1.5 % by weight to the weight of quartz glass particles used. A cubic mold was formed having internal mold cavity dimensions of 250 X 400 X 1500 mm with a wall thickness of 30 mm. A 400 X 500 mm surface of the mold was positioned as the top surface of the mold. Through this top surface a hole, having a diameter of 150 mm, was formed. A conventional cylindrical feeding head was mounted through the hole. The external end of the feeding head was exposed to form a gate through which molten material could be poured. Quartz glass particles of the same size of those of the mold material were packed around the mold to serve as a slow cooling, annealing layer surrounding the outside of the mold.

Al₂O₃-ZrO₂-SiO₂ ceramic material including ZrO₂ by 33 wt.% was melted at 1900 °C in electric furnace. This molten material was poured into the mold and was annealed (slow cooled) for about one week before the casting was removed from the mold. The casting produced was entirely free of blow holes, had no detectable cracks and showed no detectable evidence of seizing. The sides were essentially flat with no detectable evidence of concaving. The dimensional accuracy of the casting was not only within acceptable tolerance but was essentially right on the nominal design dimensions, something which almost never occurs with castings produced using conventional silica sand molds. Repetition of this Example produced consistently accurate dimensions, all well within design tolerances, a dimensional consistency which is virtually unheard of for castings manufactured using conventional silica sand (α-quartz) molds.

The quartz glass particles used to form the Example mold were washed in water, dried and screened to separate out the fine powder and dust, and all particles, smaller in size than 0.4 mm [40 mesh]. It was determined that there was only 2 % by weight of the used quartz glass particles which were less than 0.4 mm [40 mesh] in size, with 98 % of the used particles remaining 0.4 mm [40 mesh] or greater in size. In other words 98 % of the used quartz glass particles could be reused. Subsequent tests indicated that, in no case, were any less than 95 % of the used quartz glass particles reusable.

The thermal conductivity of quartz glass is less and slower than that of silica sand. It is, for example, 65 % of the thermal conductivity rate of natural silica sand. This is partially explained by the fact that quartz glass has a density of 2.21 gm/cm³, which is less than the 2.65 gm/cm³ density of silica sand. The density of the quartz glass mold remains stable, in contrast to density variations which occur in conventional silica sand molds as crystalline phase transformation occurs. Consequently, the quartz glass particle mold absorbs a lesser quantity of heat (in calories) per unit of time than does a conventional silica sand mold, with the absorption rate being consistent. Thus, the quartz glass mold does not suddenly absorb heat from the molten material and/or the solidifying casting, a phenomenon which does occur when conventional silica sand molds are used and the endothermic crystalline phase transformation suddenly occurs. In addition, the coefficient of thermal expansion of quartz glass is 5.5 - 5.8 X 10⁻⁷, being so small that thermal expansion of the mold can be essentially ignored. Thus, castings with high dimensional accuracy, and free from concave surfaces and cracks, can be produced by using a quartz glass mold.

As indicated before, the quartz glass particles used for the mold of the present invention are so chemically and physically stable that there is hardly any break-down of those particles into fractured chips, fine powder or dust. When molten material is poured into the mold, there is essentially nothing broken off or fractured to become entrained into the molten material to result in contamination of the final casting. Thus the castings are purer and therefore can more assuredly perform up to their design capabilities, e.g., refractory properties and capabilities.

Also, a indicated above. because of the low incidence of particle break-down, the quartz glass particles can be reused many times as a mold material. Only a small amount of new, virgin quartz glass particles needs to be added as new mold material to supplement the used quartz glass particles. If the recycling ratio of used quartz glass particles is 95 %, they can be used 20 times on average according to the following calculation; 1 + 0.95 - 0.95² + 0.95³ + ... = 1/(1-0.95) = 20. This is 10 times greater than the recycling ratio established for conventional silica sand α-quartz particles used for molds. This advantage in durability compensates for the fact that quartz glass is 8 times more expensive than conventional silica sand (α-quartz).

But even beyond this, the fact that the large quantities of fine powder and dust can be eliminated indicates that the costs associated with the purchase, operation and maintenance of dust collectors and associated equipment can be essentially eliminated, and the cost of disposal of the large quantities of fine powder and dust can be substantially reduced. Therefore the cost advantage becomes even greater.

Finally, taking into account the fact that consistently better castings can be produced, with considerably less scrap product being produced, the overall economies of using quartz glass particle molding material becomes quite persuasive.

Although the foregoing describes the current preferred embodiment and best presently known mode of the present invention, there are many variations and alternatives for application of the present invention. Thus it is to be understood that the scope of the present invention is restricted, constrained and limited only by the scope of the following claims.

## Claims

1. A mold for casting molten materials, said mold being of a predetermined shape and having a predetermined size and shape of mold cavity, a material of said mold comprising quartz particles, characterized in that said mold is composed of quartz glass particles only with or without a binder, said mold being capable for casting a Al₂O₃-ZrO₂-SiO₂ ceramic material, or a Al₂O₃-SiO₂ ceramic material.

2. The mold of claim 1, characterized in that said predetermined shape of said mold cavity comprises a substantially rectangular parallelepiped.

3. The mold of claim 1, characterized in that the size of said quartz glass particles of said mold are between 0.3 mm (48 Tyler mesh) and 2.4 mm (8 Tyler mesh).

4. The mold of claim 1, characterized in that said mold comprises organic binder in an amount of 0.5 - 5 wt. %.

5. The mold of claim 1, characterized in that said mold includes no binder and is formed by a vacuum suction method.

6. The mold of claim 1, characterized in that the mold further comprises a slow cooling layer arranged to surround said mold.

7. The mold of claim 6, characterized in that said slow cooling layer is composed of quartz glass particles.

8. The mold of claim 7, characterized in that said quartz glass particles of said mold and said slow cooling layer have substantially the same sizes of said quartz glass particles.

9. The mold of claim 1, characterized in that 95 % or more of said quartz glass particles are capable of being reused in the formation of a new mold.

## Patentansprüche

1. Gußform zum Gießen von geschmolzenen Materialien, wobei die Gußform von einer vorbestimmten Form ist und einen Gußformhohlraum einer vorbestimmten Größe und Form aufweist, wobei ein Material der Gußform Quarzpartikel aufweist, dadurch gekennzeichnet, daß die Gußform nur aus Quarzglaspartikeln mit oder ohne Bindemittel besteht, wobei die Form geeignet ist zum Gießen von einem Al₂O₃-ZrO₂-SiO₂-Keramikmaterial oder einem Al₂O₃-SiO₂-Keramikmaterial.

2. Gußform nach Anspruch 1, dadurch gekennzeichnet, daß die vorbestimmte Form des Gußformhohlraumes einen im wesentlichen rechteckförmigen Parallelepiped aufweist.

3. Gußform nach Anspruch 1, dadurch gekennzeichnet, daß die Größe der Quarzglaspartikel der Gußform zwischen 0,3 mm (48 Tyler mesh) und 2,4 mm (8 Tyler mesh) liegt.

4. Gußform nach Anspruch 1, dadurch gekennzeichnet, daß die Gußform ein organisches Bindemittel in einer Menge von 0,5 bis 5 Gew.-% aufweist.

5. Gußform nach Anspruch 1, dadurch gekennzeichnet, daß die Gußform kein Bindemittel aufweist und durch ein Vakuumsaugverfahren geformt ist.

6. Gußform nach Anspruch 1, dadurch gekennzeichnet, daß die Gußform eine langsam abkühlende Schicht aufweist, die die Gußform umgibt.

7. Gußform nach Anspruch 6, dadurch gekennzeichnet, daß die langsam abkühlende Schicht aus Quarzglaspartikeln gebildet ist.

8. Gußform nach Anspruch 7, dadurch gekennzeichnet, daß die Quarzglaspartikel der Gußform und die der langsam abkühlenden Schicht im wesentlichen dieselbe Größe aufweisen.

9. Gußform nach Anspruch 1, dadurch gekennzeichnet, daß 95 % oder mehr der Quarzglaspartikel bei der Bildung einer neuen Gußform wiederverwendbar sind.

## Revendications

1. Moule pour le coulage de matières fondues, ledit moule ayant une forme prédéterminée et comportant une cavité de moulage de taille et de forme prédéterminées, la matière constituant ledit moule comprenant des particules de verre de quartz, caractérisé en ce que ledit moule est constitué uniquement de particules de verre de quartz, avec ou sans liant, ledit moule étant en mesure de couler une matière céramique Al₂O₃-ZrO₂-SiO₂ ou une matière céramique Al₂O₃-SiO₂.

2. Moule selon la revendication 1, caractérisé en ce que ladite forme prédéterminée de ladite cavité de moulage comprend un parallélépipède essentiellement rectangle.

3. Moule selon la revendication 1, caractérisé en ce que la taille desdites particules de verre de quartz dudit moule est comprise entre 0,3 mm (maille Tyler de 48) et 2,4 mm (maille Tyler de 8).

4. Moule selon la revendication 1, caractérisé en ce que ledit moule comprend un liant organique dans la proportion de 0,5 à 5 % en poids.

5. Moule selon la revendication 1, caractérisé en ce que ledit moule ne comporte pas de liant et est formé par un procédé d'aspiration sous vide.

6. Moule selon la revendication 1, caractérisé en ce que le moule comporte en outre une couche de refroidissement lent disposée de façon à entourer ledit moule.

7. Moule selon la revendication 6, caractérisé en ce que ladite couche de refroidissement lent est constituée par des particules de verre de quartz.

8. Moule selon la revendication 7, caractérisé en ce que lesdites particules de verre de quartz utilisées pour ledit moule et pour ladite couche de refroidissement lent ont essentiellement la même taille de particules de verre de quartz.

9. Moule selon la revendication 1, caractérisé en ce que 95 % en poids, ou plus, desdites particules de verre de quarts sont susceptibles d'être récupérées pour former un nouveau moule.
